# EUROPEAN PATENT APPLICATION

(11) **EP 3 786 797 A1**
(43) Date of publication of application: **03.03.2021**
(21) Application number: 20193501.2
(22) Date of filing: 28.08.2020
(51) Int. Cl.: G06F 9/50

(54) **CLOUD RESOURCE MARKETPLACE**

(30) Priority: 31.08.2019 US 201962894743 P; 22.11.2019 US 201962939574 P; 31.01.2020 US 202016779047
(71) Applicant: Nutanix, Inc., San Jose, California 95110 (US)
(72) Inventor: GILL, Binny Sher, San Jose, CA California 95131 (US); PARAB, Nitin, Palo Alto, CA California 94303 (US); BROWN, Aaron Dean, Sunnyvale, CA California 94085 (US)
(74) Representative: Herre, Peter

(57) **Abstract**

Methods, systems and computer program products for configuring private cloud computing resources to run a workload in the execution context of a dynamically configured virtualization system. Embodiments commence upon receiving a computing workload demand specification from a resource demander. The workload demand specification is delivered to a brokerage service. The brokerage service in turn identifies an available computing resource of a private cloud provider that matches up with the received computing workload demand specification. A virtualization system that is dynamically configured for the specified workload is installed on some or all of the available computing resources of the private cloud provider. Once the virtualization system is configured, installed and able to accept a workload for execution, the computing workload is scheduled to run in the virtualization system.

## Description

### FIELD

This disclosure relates to cloud computing, and more particularly to techniques for implementing a marketplace of virtualized cloud resources.

### BACKGROUND

To avail itself of the capabilities of public cloud resource providers, an entity becomes a tenant of the cloud resource provider. As of the moment of tenancy, the entity must take actions to fulfill the tenancy agreement. These actions might include maintaining one or more instances of processes to be executed, maintaining up-to-date records as pertains to the entity's credentials, use models, etc.

In certain situations, the entity might want to be released from having to perform the tenant actions. For example, and for various reasons, the entity might want to move to a different cloud provider, or the entity might want to scale the scope of tenancy and move to a smaller (or larger) computing resource.

Unfortunately, current public cloud use models have innate barriers (e.g., use of proprietary APIs) that inhibit switching from one public cloud resource provider to another public cloud resource provider. Such barriers manifest themselves as technical problems to be solved. As examples, what is needed are: (1) a means for easily identifying alternative computing infrastructure, and (2) a means for easily moving a currently-in-execution cloud computing instance from one computing infrastructure installation to another computing infrastructure installation.

To address the aforementioned technical problems to be solved, what is needed is a technique or techniques that address determining availability and applicable types of computing architectures that match specified demands for computing resources.

### SUMMARY

The invention is defined by the independent claims. The dependent claims concern optional features of some embodiments of the invention. The present disclosure describes techniques used in systems, methods, and in computer program products that are used in a cloud resource marketplace, which techniques advance the relevant technologies to address technological issues with legacy approaches. More specifically, the present disclosure describes techniques used in systems, methods, and in computer program products for cloud resource brokerage in a cloud resource ecosystem. Certain embodiments are directed to technological solutions for configuration and operation of a cloud computing resource brokerage module to dynamically migrate workloads on demand.

There are many inventive aspects and embodiments. One embodiment includes a computer-implemented brokerage service. When a brokerage service is established on a computer, it includes a mechanism for a resource provider to request registration. The request can be made, for example, via an API or web service call to a service facility operated by or on behalf of the broker. In some cases, the resource broker configures a unified console and offers access to such a console to any and all participants in the ecosystem. For example, with respect to entities having computing resource availability, any of such entities (e.g., public cloud resource providers, private cloud resource providers, schools, research institutes, businesses, etc.) from any location worldwide can access the unified console to engage in registration of their resources such that those resources can be offered for use by entities having demand for computing resources.

Any of such entities may host a set of computing resources that are held out (e.g., registered) as available for use by others. As used herein, the brokerage service distinguishes between resources that are owned by any particular one of the foregoing entities and resources that are not owned by the same particular one of the entities. As such, it is possible for a particular entity to host a first set of computing resources that are held out as available for use by others, while concurrently hosting other computing resources that are not held out as available for use by others.

In one embodiment, a private cloud provider might itself act as a resource demander and engage the brokerage service to identify resources that are not owned by the first private cloud provider, but rather are owned by some other private cloud provider. The brokerage service is configured for registering availability of an entity's owned and held-out computing resources separately from registering demand for access to computing resources that are not owned by the resource demander. As such, the brokerage service can satisfy a resource demander's request for computing resources using resources that are not owned by the resource demander.

To register a request for computing resources, and/or to register a resource provider's held-out resources, the resource broker initiates a registration procedure which may result in a variety of broker-initiated events including creation of a registration database and/or making entries into the registration database. In response to at least one successful registration event by a resource provider, the brokerage service delivers virtualization environment code which virtualization environment code is installed at the registrant's location possibly on several platforms. In one aspect, the installation can be installed on "bare metal" or can be installed in a partition that is provided in a multi-tenant computing environment.

In one aspect, the virtualization environment installation module is an agent or "bootstrap module" that provides access to API endpoints and/or web service definitions to enable certain predefined interactions to be carried out by and between the resource provider and the broker. In some embodiments, the virtualization environment installation module includes a library of components of a virtualization environment. Such a virtualization environment can be configured to establish a logical partition on the platform such that any process can run in the virtualization environment with complete and secure isolation. In this configuration, any process that runs in the virtualization environment is unable to access any resources outside of the virtualization environment. Furthermore, any process that runs in the virtualization environment will observe (or be governed to observe) consumption of only a certain amount of resources.

In one aspect, a resource demander will specify a computing workload to be executed on some computing resource that is registered at the broker. A message containing a workload specification might be offered to the resource broker via a web services call to the broker. The resource broker analyzes the workload specification and characterizes the work to be performed. The analysis of the workload is performed in a manner that facilitates matching the workload to the then-current availability of various registered platform configurations. In some cases, a workload can be specified as a "standard" workload. For example, a virtual desktop infrastructure (VDI) can have an associated set of resource demands that correspond to the computing demands of various productivity applications (e.g., MICROSOFT OFFICE™) in a client-server mode.

In certain aspects, heuristics and/or matching rules are applied to one or more combinations of registered platforms that are considered for use in executing the workload. When one or more matches are determined, at least one platform is selected for executing the workload, and a virtualization image of the workload is configured so as to be available for running in the virtualization environment. The virtualization image may comprise a virtualization system installer that is delivered to the applicable platform together with a modified instance of the workload. The modified instance can be based on characteristics of the workload and/or characteristics of the applicable platform and/or any combination of any of the aforementioned characteristics. The modified instance of the workload can be configured to run as one or more virtual machines. Moreover, the modified instance of the workload might be configured to interface with any number of virtualization modules. A workload might be configured to interface with any number of preconfigured and pretested applications. The characteristics of the workload, in combination with results of the application of heuristics and/or matching rules inform an image selector, which image selector can access a vast array of possible images from an image library.

An selected image can be transmitted to the resource provider together with any needed commands that pertain to installing, maintaining and removing the virtualization image. In some cases, the commands serve to further modify the workload image and/or configure the virtualization image to comport with characteristics of the target platform.

In some embodiments, execution of the workload in the virtualization environment is monitored. Results emitted by the workload are sent to resource demanders via a browser or other man-machine interface that is configured to receive results of execution of the workload. In still other embodiments, results of execution of the workload and/or commands are delivered to the resource broker at a module that is configured to receive results of the workload and/or commands.

Some embodiments include matching rules that in turn include syntax and semantics that facilitate matching on a wide range of variables. The matching rules may consider a specified amount of resources and/or ranges of resources that are defined quantitatively using a threshold value. Additionally, or alternatively, matching rules may consider user-specified models, which may in turn include multiple specific levels of service. The foregoing parameters and value are quantitative and, as such, when matching demand to a platform, any or all of the above can be considered in quantitative clauses of the matching rules.

In one aspect, a set of resources that are available from any one or more of the resource providers can be assembled into an ephemeral cloud. This dynamically-assembled cloud is ephemeral in the sense that the cloud can be formed from components that are logically assembled based on dynamically-determined, then-current resource availability. Such an ephemeral cloud can be logically disassembled, resource-by-resource, merely by releasing any given resource (e.g., when a computing resource workload completes). When all components of all resources of the ephemeral cloud have been released, the ephemeral cloud vanishes. In some cases, a resource of an ephemeral cloud that was previously released can be used in a different cloud, or picked up again in the case that a particular computing resource workload raises new resource

In some embodiments, the virtualization environment launches a background task that continuously evaluates availability of resources on the platform(s). Resource availability is characterized in many dimensions including CPU headroom, CPU memory availability, network availability, and storage capacity availability. On an ongoing basis, the then-current resource availability as well as any other then-current parameters are sent to the resource broker. The resource broker receives the then-current availability and keeps track of such availability in the registration database. These ongoing processes can continue indefinitely. As such, the resource broker is able to maintain a regularly updated database of up-to-date resource availability.

In some embodiments, an updated visualization image can be requested from the resource broker. The resource broker can consider any up-to-date resource configurations and send an updated virtualization image based on updates as recommended and/or provided by an image selector. Once the resource provider has received the virtualization image and corresponding commands, the resource provider can process the demanded work on the provider's available computing resources.

One aspect includes a protocol that is provided such that a resource provider can, at any moment in time, advise the resource broker of the status of the resources. As such, a resource provider can add or upgrade or swap-in or swap-out resources at will, and the resource broker can use such updated information when matching demand to available resources. As one specific case, a resource provider might add storage capacity. As such, an updated virtualization image might include updated features.

Embodiments are supported where the processes of hibernation, migration and resumption of a workload might use primary and secondary network addresses.

In another aspect, a event can be raised that causes the resource broker to identify a resource provider to perform a RESUME of the hibernated virtualization system. In this situation, a hibernated virtualization system image is resumed on computing resources at a second location. A computing resource at the second location receives the virtualization image from the broker, performs the RESUME function over the virtualization image and begins to execute the workload.

In one aspect, a brokerage directory is maintained to hold registration data comprising a set of offered computing resources and a set of expressed demands for resources. The demands are expressed as workload specifications that can be parsed by a computer to determine a corresponding set of demanded computing resources. The demanded computing resources can be analyzed to determine possible deployment configurations.

In one embodiment, the brokerage directory is configured to find all available resources that match the possible deployment configurations. One or more feasible deployment configuration is selected and the task of mapping the demanded resources onto the selected deployment configuration commences. A configured virtualization environment can then be deployed within a virtualization environment installer that includes an instance of the workload. When workload execution commences, monitoring of the execution of the workload and monitoring of the health of the deployed virtualization environment is carried out continuously until such time as the workload execution ends, or is halted, or is suspended or hibernated, or until monitoring is otherwise suspended.

In one aspect, the processing for determining one or more resource offerings that could possibly satisfy the demand is based on heuristics that seek to identify as many feasible offerings as possible. Rather than selecting the first feasible offering from the resource offerings, the opposite approach may be taken. That is, after gathering the set of up-to-date entries for all resource offerings, each demand specification is compared against the set of all up-to-date resource offering. Any resource offering that fails to satisfy any particular demand specification is eliminated from further consideration. If the demand specification includes a particular security level specification, then any resource offering that does not have sufficient hardware capabilities (e.g., a hardware encryption processor) is eliminated from further consideration.

This process of considering individual items of the given demand specifications one-by-one serves to eliminate entries for resource offerings that are not feasible for addressing the particular individual demand item. Each demand specification is considered individually to correspond to a virtual resource. Characteristics of a demand specification and its corresponding virtual device are normalized and the virtual device is configured in accordance with the normalized demand. The configured virtual device is added to a manifest of virtualized resources. For each item in the manifest, the nature of the virtual resource is considered with respect to a hypervisor and with respect to one or more virtual machines. In some cases, a particular virtualized resource is manifested as a configuration of a hypervisor whereas, in other cases, a particular virtualized resource is manifested as a configuration of a virtual machine.

In one aspect, a deployment may involve multiple nodes of the resource provider's infrastructure, and each node may host a deployment instance. In some embodiments, a first node involved in the deployment is addressed so as to start execution of that node's hypervisor, after which each virtual machine belonging to that node's hypervisor is then started. In some cases, the hypervisor can be invoked at an entry point such that the hypervisor autonomously starts its own virtual machines. In other cases, multiple calls can be made to the hypervisor to (1) bring-up the hypervisor to a ready state (e.g., where all virtualized devices have been configured with respect to the underlying hardware), and (2) invoke a virtual machine loader routine, which in turn will invoke each virtual machine of the hypervisor according to a predefined schedule.

Some embodiments include code for continually monitoring execution of the deployable instance. A deployable instance may include sufficient monitoring code and instructions such that any or all of the nodes used at the resource provider location can be continually monitored. In some cases, the total number of nodes consumed during the execution of the workload is not known at the time the installer is generated and, in such cases, the monitoring code in the installer includes provisions for dynamic deployment of the monitoring code. A remediation process runs concurrently and in cooperation with monitoring process. A remediation process may receive messages from monitoring process. If the monitoring process reports an unrecoverable timeout on a network interface, the remediation process might allocate and substitute in an alternate network interface.

A process runs continually to monitor progress of execution of the workload. A companion process serves to continually be responsive to any commands or other instructions from the demander. The process can respond to a message or API call or web service call that raises an event to initiate processing of a suspend or release or hibernate or resume command.

Some embodiments support heterogeneous hypervisor hibernation and save and restore transitioning. The hypervisor save and restore techniques involve moving a hypervisor and its one or more virtual machines from a first computing environment of a first type to a second computing environment of a different, second type. Hypervisor states, including any states of any virtual machines running atop the hypervisor, can be saved (e.g., after a quiesce phase) and restored (e.g., after a migration) to a different set of physical computing resources or to the same set of physical resources in a different configuration. Any of the hypervisor save and restore techniques can be used to process any types of hardware or software states.

In some aspects, a hibernated hypervisor is moved from a first set of computing resources in a first configuration to a second set of computing resources in a second configuration. As such, the acts of wake-up include reconciliation of any state parameters that could differ (e.g., differ in semantics, or differ in value, etc.) between the two configurations. Strictly as an example, during wake-up of a hibernated hypervisor on a second system, the IP address that was recorded in the "SAVE" portion of hibernate and wake-up of a node would be replaced or otherwise reconciled with the IP address of the target node on which node the "RESTORE" is taking place. A migrated virtual machine may wake-up in a different hardware configuration as compared to the hardware configuration of the environment from which it was migrated. In some cases, it is desired that the state of a hibernated hypervisor of a first type is restarted into a hypervisor of a second type.

A hypervisor can be migrated from an on-premises (i.e., on-prem) setting into a public cloud (or vice-versa). Or a hypervisor can be migrated from a public cloud to a private cloud (or vice-versa). Or, a hypervisor can be migrated from a first on-prem setting to a second on-prem setting (or vice-versa). In some situations, hypervisor hibernation can be chained. As such, a first hibernation from a first platform can be followed by a first wake-up at a second platform, and a second hibernation from the second platform can be followed by a second wake-up at a third platform, and so on. As depicted, the configuration of the first platform can be different from the configuration of the second platform, and so on.

In various embodiments, any combinations of any of the above can be combined to perform in any variation, and many such combinations of aspects of the above elements are contemplated.

Further details of aspects, objectives, and advantages of the technological embodiments are described herein, and in the drawings and claims.

### BRIEF DESCRIPTION OF THE DRAWINGS

The drawings described below are for illustration purposes only. The drawings are not intended to limit the scope of the present disclosure.

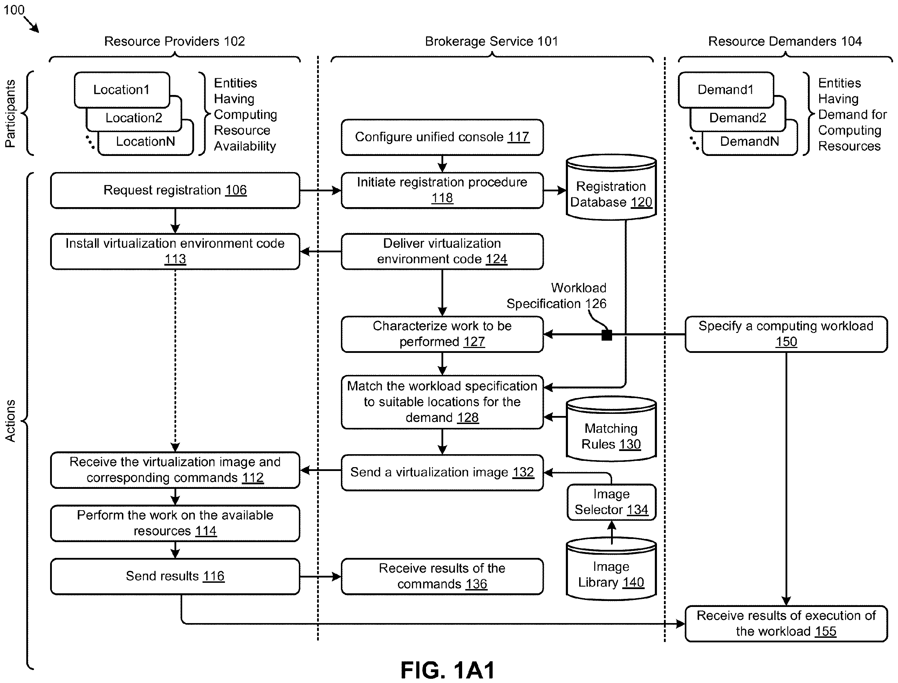

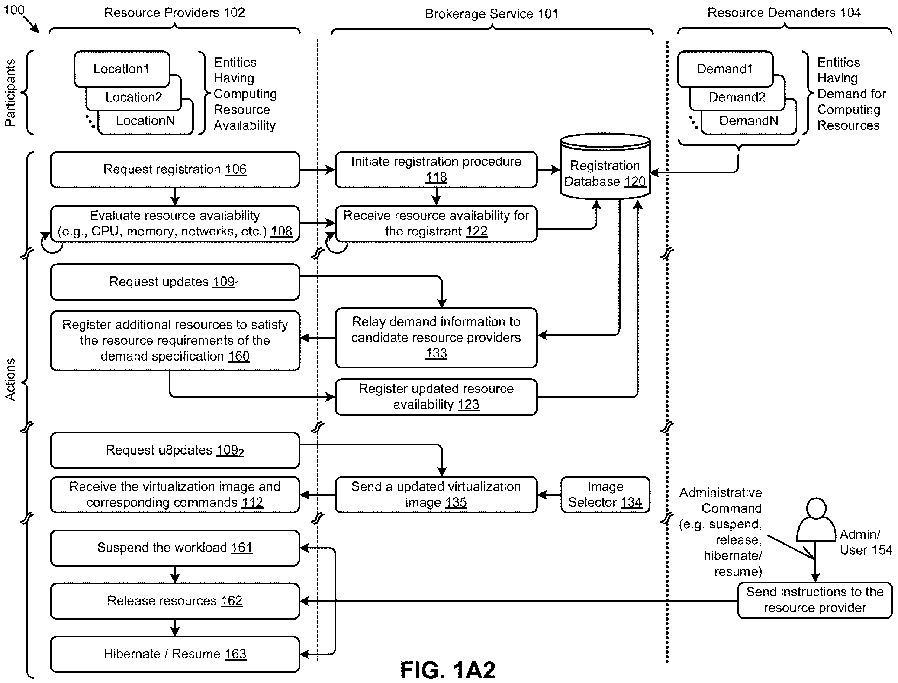

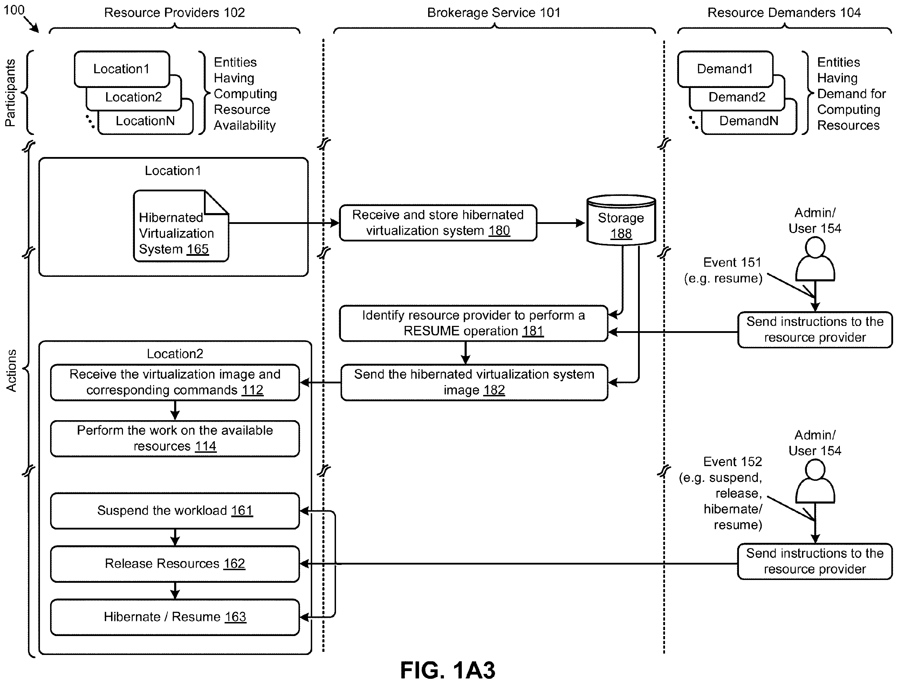

**FIG. 1A1** exemplifies interactions among participants of a computing equipment ecosystem that supports deployment of a cloud computing resource brokerage module in a cloud resource ecosystem, according to an embodiment.
**FIG. 1A2** presents additional interactions that support ongoing management of a resource provider's platform, according to an embodiment.
**FIG. 1A3** exemplifies sample interactions among participants of a computing equipment ecosystem so as to implement workload migration from a first resource provider to an alternative resource provider, according to an embodiment.
**FIG. 1B** depicts sample interactions between participants of a computing equipment ecosystem that supports deployment of a cloud computing resource brokerage module in a cloud resource ecosystem, according to an embodiment.
**FIG. 2** exemplifies a processing flow used to implement cloud resource brokerage operations in a cloud resource ecosystem, according to an embodiment.
**FIG. 3** exemplifies a matching technique as used to implement cloud resource brokerage operations in a cloud resource ecosystem, according to an embodiment.
**FIG. 4** exemplifies a resource mapping technique as used to implement cloud resource brokerage operations in a cloud resource ecosystem, according to an embodiment.
**FIG. 5** exemplifies a virtualization environment configuration technique as used to implement cloud resource brokerage operations in a cloud resource ecosystem, according to an embodiment.
**FIG. 6** exemplifies a virtualization environment deployment technique as used to implement cloud resource brokerage operations in a cloud resource ecosystem, according to an embodiment.
**FIG. 7** exemplifies a virtualization environment monitoring technique as used to implement cloud resource brokerage operations in a cloud resource ecosystem, according to an embodiment.
**FIG. 8** depicts hypervisor SAVE and RESTORE functions 800, according to an embodiment.
**FIG. 9A**, **FIG. 9B**, and **FIG. 9C** depict virtualized controller architectures comprising collections of interconnected components suitable for implementing embodiments of the present disclosure and/or for use in the herein-described environments.

### DETAILED DESCRIPTION

Aspects of the present disclosure solve problems associated with using computer systems for determining availability of computing architectures that match specified demands for computing resources. These problems are unique to, and may have been created by, various computer-implemented methods for determining availability of computing architectures that match specific demands for computing resources in the context of cloud computing systems. Some embodiments are directed to approaches for configuration and operation of a cloud computing resource brokerage module to dynamically migrate workloads on demand. The accompanying figures and discussions herein present example environments, systems, methods, and computer program products for cloud resource brokerage in a cloud resource ecosystem.

### OVERVIEW

High switching costs that are incurred when moving from one computing infrastructure installation to another computing infrastructure installation are eschewed by virtually all computing resource users. Moreover, such unacceptably high switching costs present a barrier to the formation of a computing resource marketplace. This in turn hinders development of cloud ecosystems, thus slowing widespread adoption of public cloud services. What is needed is a way to match computing resource demands (e.g., computing resource workloads) to alternative computing resources (e.g., alternative cloud services). What is needed is a fabric of consumers that have demands for particular types of computing resources and providers that have corresponding computing resource availability. What is needed is a way to match these particular computing resource demands to available computing resources that meet the particular demands. Moreover, what is needed is a way to mix and match from a plurality of computing resource providers to satisfy initial demands as well as changing demands. For example, a "map reduce" type of workload might initially demand only one computing node however, dynamically, during the course of execution of the map reduce workload, the map reduce workload might need many hundreds of computing nodes.

One embodiment includes a resource broker that matches resource providers (e.g., any entity that operates a computing infrastructure) to resource demanders (e.g., any entity that expresses a need or a specific demand for a particular type of computing infrastructure). At any moment in time, a set of resources that are available from any one or more of the resource providers can be assembled into an ephemeral cloud. This dynamically-assembled cloud is ephemeral in the sense that the cloud can be formed from components that are logically assembled based on dynamically-determined, then-current resource availability. Such an ephemeral cloud can be logically disassembled, resource-by-resource, merely by releasing any given resource (e.g., when a computing resource workload completes). When all components of all resources of the ephemeral cloud have been released, the ephemeral cloud vanishes. In some cases, a resource of an ephemeral cloud that was previously released can be used in a different cloud, or picked up again in the case that a particular computing resource workload raises new resource demands during the course of running the workload.

### Definitions and Use of Figures

Some of the terms used in this description are defined below for easy reference. The presented terms and their respective definitions are not rigidly restricted to these definitions-a term may be further defined by the term's use within this disclosure. The term "exemplary" is used herein to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion. As used in this application and the appended claims, the term "or" is intended to mean an inclusive "or" rather than an exclusive "or". That is, unless specified otherwise, or is clear from the context, "X employs A or B" is intended to mean any of the natural inclusive permutations. That is, if X employs A, X employs B, or X employs both A and B, then "X employs A or B" is satisfied under any of the foregoing instances. As used herein, at least one of A or B means at least one of A, or at least one of B, or at least one of both A and B. In other words, this phrase is disjunctive. The articles "a" and "an" as used in this application and the appended claims should generally be construed to mean "one or more" unless specified otherwise or is clear from the context to be directed to a singular form.

Various embodiments are described herein with reference to the figures. It should be noted that the figures are not necessarily drawn to scale, and that elements of similar structures or functions are sometimes represented by like reference characters throughout the figures. It should also be noted that the figures are only intended to facilitate the description of the disclosed embodiments-they are not representative of an exhaustive treatment of all possible embodiments, and they are not intended to impute any limitation as to the scope of the claims. In addition, an illustrated embodiment need not portray all aspects or advantages of usage in any particular environment.

An aspect or an advantage described in conjunction with a particular embodiment is not necessarily limited to that embodiment and can be practiced in any other embodiments even if not so illustrated. References throughout this specification to "some embodiments" or "other embodiments" refer to a particular feature, structure, material or characteristic described in connection with the embodiments as being included in at least one embodiment. Thus, the appearance of the phrases "in some embodiments" or "in other embodiments" in various places throughout this specification are not necessarily referring to the same embodiment or embodiments. The disclosed embodiments are not intended to be limiting of the claims.

### DESCRIPTIONS OF EXAMPLE EMBODIMENTS

**FIG. 1A1** exemplifies interactions among participants of a computing equipment ecosystem 100 that supports deployment of a cloud computing resource brokerage module in a cloud resource ecosystem. The figure depicts three type of participants: (1) participants that have computing resources available for use in performing a computing workload (e.g., the shown resource providers 102), (2) participants that have a workload and needs or demands for the workload to be executed (e.g., the shown resource demanders 104), and (3) a resource broker that operates a brokerage service 101.

When the brokerage service 101 is established, it includes a mechanism for a resource provider to request registration (interaction 106). The request can be made, for example, via an API or web service call to a service facility operated by or on behalf of the broker. In some cases, the resource broker configures a unified console 117 and offers such a console to any and all participants in the ecosystem. For example, with respect to entities having computing resource availability, any of such entities (e.g., public cloud resource providers, private cloud resource providers, schools, research institutes, businesses, etc.) from any location worldwide (e.g., the shown Location1, Location2, ..., LocationN) can access the unified console to engage in registration of their resources such that those resources can be offered for use by entities having demand for computing resources (e.g., the shown Demand1, Demand2, DemandN).

Any of such entities (e.g., public cloud resource providers, private cloud resource providers, schools, research institutes, businesses, etc.) may host a set of computing resources that are held out (e.g., registered) as available for use by others. As used herein, the brokerage service distinguishes between resources that are owned by any particular one of the foregoing entities and resources that are not owned by the same particular one of the entities. As such, it is possible for a particular entity to host a first set of computing resources that are held out as available for use by others, while concurrently hosting other computing resources that are not held out as available for use by others. That is, any particular entity can act concurrently as a resource provider (e.g., one of the shown resource providers 102) as well as a resource demander (e.g., one of the resource demanders 104).

As an example, a first private cloud provider that holds out computing resources to be made available for use by others might experience periodic periods of "peak demand." To satisfy such the peak demand, the first private cloud provider might itself act as a resource demander and engage the brokerage service to identify resources that are not owned by the first private cloud provider, but rather are owned by some other second private cloud provider. More generally, the brokerage service is configured for registering availability of an entity's owned and held-out computing resources separately from registering demand for access to computing resources that are not owned by the resource demander. As such, the brokerage service can satisfy a resource demander's request for computing resources using resources that are not owned by the resource demander.

To register a request for computing resources, and/or to register a resource provider's held-out resources, the resource broker initiates a registration procedure 118, which may result in a variety of broker-initiated events including creation of a registration database 120 and/or making entries into the registration database.

In response to at least one successful registration event by a resource provider, the brokerage service 101 delivers virtualization environment code (interaction 124), which virtualization environment code is installed at the registrant's location (interaction 113), possibly on several platforms. The installation can be installed on "bare metal" or can be installed in a partition that is provided in a multi-tenant computing environment. In some embodiments, the virtualization environment installation module is merely an agent or "bootstrap module" that provides access to API endpoints and/or web service definitions to enable certain predefined interactions to be carried out by and between the resource provider and the broker. In some embodiments, the virtualization environment installation module includes a library of components of a virtualization environment.

Such a virtualization environment is configured to establish a logical partition on the platform such that any process can run in the virtualization environment with complete and secure isolation. That is, any process that runs in the virtualization environment is unable to access any resources outside of the virtualization environment. Any process that runs in the virtualization environment will observe (or be governed to observe) consumption of only a certain amount of resources. For example, if the platform has 40% of available CPU headroom, and the platform has also offered this amount of CPU availability, then any process or processes that run in the virtualization environment will consume only up to 40% of the CPU cycles.

At some moment in time, a resource demander will specify a computing workload (interaction 150) to be executed on some computing resource that is registered at the broker. A message containing a workload specification 126 might be offered to the resource broker via a web services call to the broker. The resource broker analyzes the workload specification 126 and characterizes the work to be performed (interaction 127). The analysis of the workload is performed in a manner that facilitates matching the workload to the then-current availability of various registered platform configurations. In some cases, a workload can be specified as a "standard" workload. For example, a virtual desktop infrastructure (VDI) can have an associated set of resource demands that correspond to the computing demands of various productivity applications (e.g., MICROSOFT OFFICE™) in a client-server mode.

Heuristics and/or matching rules 130 are applied to one or more combinations of registered platforms that are considered for use in executing the workload. When one or more matches are determined (interaction 128), at least one platform is selected for executing the workload, and a virtualization image of the workload is configured so as to be available for running in the virtualization environment. In some cases, the virtualization image comprises a virtualization system installer that is delivered to the applicable platform together with a modified instance of the workload. The modified instance can be based on characteristics of the workload and/or characteristics of the applicable platform and/or any combination of any of the aforementioned characteristics.

In most cases, the modified instance of the workload is configured to run as one or more virtual machines. Moreover, the modified instance of the workload might be configured to interface with any number of virtualization modules. Strictly as one example, a workload might be configured to interface with any number of preconfigured and pretested applications. The characteristics of the workload, in combination with results of the application of heuristics and/or matching rules inform an image selector 134, which image selector can access a vast array of possible images from an image library 140. Strictly as examples, possible images from image library 140 or components therefrom might preconfigure and pretest applications that are specially configured so as to provide a high degree of mobility. For example, a snapshot module might be included as a component of image library 140, and the snapshot component might be configured to run in a virtual machine of the virtualization environment.

Once an image is selected, it can be transmitted (interaction 132) to the resource provider together with any needed commands that pertain to installing, maintaining and removing the virtualization image. In some cases, the commands serve to further modify the workload image and/or configure the virtualization image to comport with characteristics of the target platform.

Once the resource provider has received the virtualization image and corresponding commands (interaction 112), the resource provider can process the demanded work to the provider's available computing resources (interaction 114). Execution of the workload in the virtualization environment is monitored. Results that may be emitted by the workload are packaged. In some embodiments, the results are stored in a non-volatile location accessible by the demander. In other embodiments, results are sent to resource demanders (interaction 116) via a browser or other man-machine interface that is configured to receive results of execution of the workload (interaction 155). In still other embodiments, results of execution of the workload and/or commands are delivered to the resource broker at a module that is configured to receive results of the workload and/or commands (interaction 136).

The foregoing matching rules include syntax and semantics that facilitate matching on a wide range of variables. Strictly as examples, matching rules may consider a specified amount of resources and/or ranges of resources that are defined quantitatively using a threshold value. Additionally, or alternatively, matching rules may consider a user-specified pricing model. Such pricing models may include multiple thresholds that correspond to different pricing amounts as a function of consumed resources, and/or the different pricing amounts may correspond to a level of consumed resources in comparison to resource usage thresholds. Moreover, the pricing model may include multiple specific levels of service, which levels of service can have respective pricing. All of the foregoing parameters and value are quantitative and, as such, when matching demand to a platform, any or all of the above can be considered in quantitative clauses of the matching rules.

Continuing the discussion of the environment of FIG. 1A1, it can happen that (1) the configuration and/or availability of the offered resources may change, and/or (2) an administrator or other designated person or agent raises additional commands, possibly during the time of execution of the workload.

**FIG. 1A2** presents additional interactions that support ongoing management of a resource provider's platform. FIG. 1A2 differs from FIG. 1A1 at least in three aspects: (1) FIG. 1A2 shows how asynchronous changes to the computing resources can be registered with the broker, (2) FIG. 1A2 shows how a resource provider can get access to, and respond to, the full range of then-current demands, and (3) FIG. 1A2 shows various actions that are carried out by a resource provider in response to received remote control commands from a resource demander. As shown, such actions include resource management functions of (a) suspending a workload, (b) releasing resources that had been allocated by performance of the workload, and (c) hibernating a workload in preparation for migration or long-term suspension.

Techniques for any/all of these resource management functions are included in U.S. Patent Application Serial No. 16/778,909 titled "HYPERVISOR HIBERNATION", filed on January 31, 2020.

A successful installation of the aforementioned virtualization environment (via interaction 113 as shown in FIG. 1A1) launches a background task that continuously evaluates availability of resources on the platform(s). Resource availability is characterized in many dimensions including CPU headroom, CPU memory availability, network availability, and storage capacity availability. On an ongoing basis, the then-current resource availability as well as any other then-current parameters are sent to the resource broker (ongoing interaction 108). The resource broker receives the then-current availability (interaction 122) and keeps track of such availability in the registration database 120. These ongoing processes can continue indefinitely. As such, the resource broker is able to maintain a regularly updated database of up-to-date resource availability.

Additionally, ongoing demands for resources are captured by the broker, possibly in a registration database 120 (as shown). In some embodiments, the resource broker may broadcast to any one or more resource providers 102 that unfulfilled demand exists (interaction event 133). Many such demand specifications can be received by the resource broker on a continual basis. As earlier described, the resource broker can match demand to available resources and, as such, since the resource broker has information pertaining to unfulfilled demand, the resource broker can relay demand information to selected resource providers. Such a relay might cause a resource provider to make changes in the types and/or quantities of resources that are held out as being available. If so, the resource provider can do so (via interaction 160), which in turn causes the resource broker to register updates to the registration database (interaction 123). In another embodiment, relay of demand information is not broadcast; rather, when a particular resource provider desires to get updated demand information, the resource provider can explicitly request updates (interaction 109₁).

The act of making changes in types and/or quantities of resources that are held out as being available might precipitate a need for the resource provider to operate from an updated virtualization image. Such an updated visualization image can be requested from the resource broker (interaction 109₂). The resource broker can consider the up-to-date resource configuration (e.g., as a result of interaction 106) and send an updated virtualization image (interaction 135) based on updates as recommended and/or provided by image selector 134. Once the resource provider has received the virtualization image and corresponding commands (interaction 112), the resource provider can process the demanded work on the provider's available computing resources. Strictly as one example, an updated virtualization image might include updated features.

A protocol is provided such that a resource provider can, at any moment in time, advise the resource broker of the status of the resources. As such, a resource provider can add or upgrade or swap-in or swap-out resources at will, and the resource broker can use such updated information when matching demand to available resources. As one specific case, a resource provider might add storage capacity.

FIG. 1A2 further depicts management functions of suspending a workload (interaction 161), releasing resources that had been allocated by performance of the workload (interaction 162), and hibernating/releasing a workload in preparation for migration or long-term suspension (interaction 163). As shown, an administrator 154 can send a command to suspend a workload, and/or release resources that had been allocated by performance of the workload, and/or initiate hibernation activities, and/or resume operation after hibernation. To do so, a mechanism (e.g., an API) is provided such that an administrator can initiate any of the foregoing actions at will. In some embodiments, and as shown, the resource provider receives such instructions from the administrator and sends the instructions to the resource provider for processing. In other embodiments, the resource broker receives such instructions from the administrator and processes the instructions before passing onward to the resource provider. In still other embodiments, the resource broker will maintain a catalog of resources available at a given resource provider, and the effect of a release or hibernation or resume or other activity at the resource provider is recorded in the catalog.

As mentioned supra, an updated virtualization image might include updated features. In an illustrative case of a resource provider that is a public cloud purveyor, the processes of hibernation, migration and resumption of a workload might need to take place within a very short amount of time. As such an updated virtualization image that is destined for installation on a public cloud infrastructure might include features pertaining to use of primary and secondary network addresses.

One way to manage primary and secondary network addresses described in U.S. Patent Application Ser. No. 16/778,725 titled "HANDLING IP NETWORK ADDRESSES IN A VIRTUALIZATION SYSTEM", filed on January 31, 2020. Furthermore, one way to handle migration is described in U.S. Patent Application Ser. 16/778,754 titled "VIRTUAL MACHINE MIGRATION", filed on January 31, 2020.

**FIG. 1A3** exemplifies sample interactions among participants of a computing equipment ecosystem so as to implement workload migration from a first resource provider to an alternative resource provider, according to an embodiment.

There are many reasons to migrate a workload from one resource provider to another resource provider. A first resource provider might turn out to have insufficient resources available, or a particular resource provider might suffer from intermittent service, or a particular resource provider might have an undesirable billing regime. Regardless of the reasons, brokerage service 101 is positioned and configured to be responsive to a resource demander's (i.e., resource demanders 104) need to move the virtualization from one location to another location.

Consider the situation where an administrator has already issued a hibernate command. The virtualization system that was running at a particular location is now stored in data structure and is no longer running. This is shown in FIG. 1A3 as hibernated virtualization system 165 (at Location1). Responsive to the hibernate command issued by the administrator, the resource broker is able to receive and retain the hibernated system (interaction 180), which it can do by storing the hibernated virtualization system 165 in storage 188.

At some later moment in time, the administrator can issue a resume indication to raise event 151. This causes the resource broker to identify a resource provider to perform a RESUME of the hibernated virtualization system (interaction 181). In this situation, the next acts to accomplish a RESUME include sending the hibernated virtualization system image (interaction 182) to be resumed on computing resources at Location2. In response, the computing resources at Location2 receive the virtualization image from the broker, perform the RESUME function over the virtualization image (interaction 112) and begin to execute the workload (interaction 114). The virtualization system now executing at Location2 is able to receive commands from a user/admin 154. Such commands may raise a further event 152, which may correspond to the aforementioned commands to suspend the workload (interaction 161), to release the resources (interaction 162), and/or to hibernate or resume (interaction 163).

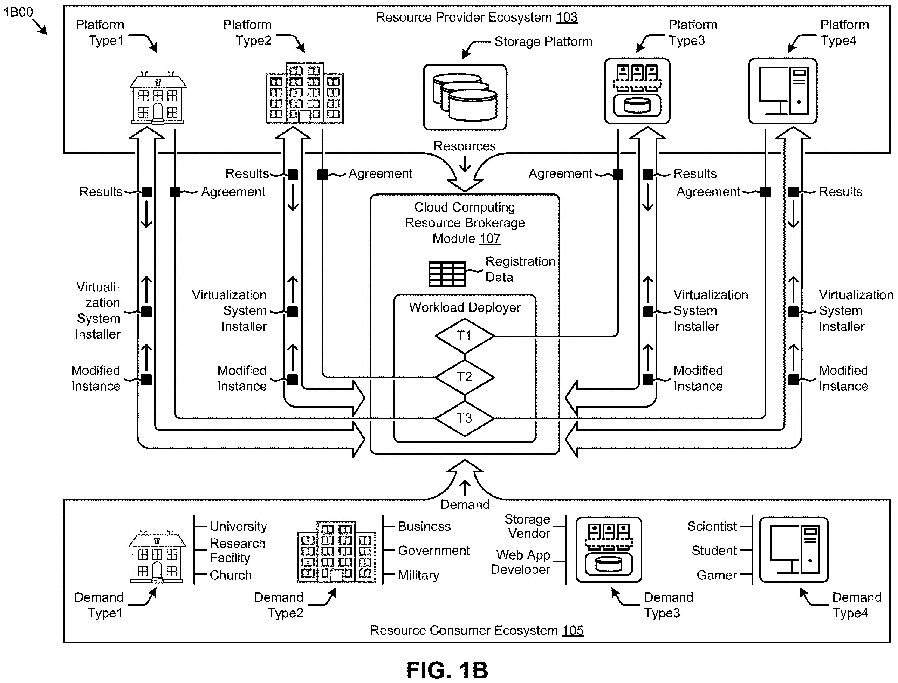

**FIG. 1B** depicts sample interactions 1B00 between participants of a computing equipment ecosystem that supports deployment of a cloud computing resource brokerage module in a cloud resource ecosystem. As an option, one or more variations of the interactions or any aspect thereof may be implemented in the context of the architecture and functionality of the embodiments described herein. In particular, variations of and/or multiple instances of the interactions might operate within any given environment.

FIG. 1B illustrates aspects pertaining to the configuration and operation of a cloud computing resource brokerage module used to dynamically migrate workloads on demand. Specifically, the figure is being presented with respect to its contribution to addressing the problem of determining availability of computing architectures that match specified demands for computing resources.

As shown, cloud computing resource brokerage module 107 is situated between a resource provider ecosystem 103 and a resource consumer ecosystem 105. The resource broker handles matching any type of demand (e.g., demand type1, demand type2, demand type3, demand type4, etc.) with particular platforms of the resource consumer ecosystem. When a demand is raised, the cloud computing resource brokerage module performs various licensing functions and matches the demand to an applicable platform. The matching might be based on platform location, or on platform type, or might be based on some form of agreement.

In some embodiments, cloud computing resource brokerage module 107 is configured to manage agreements and licenses. Specifically, the cloud computing resource brokerage module is able to access registration data to determine whether or not a particular participant has sufficient rights (e.g., from licensing or other agreements) to be able to carry out (e.g., execute) the functions (e.g., licensed function) that are embedded in a particular deployment.

A cloud computing resource brokerage module serves to manage several different types of agreements. As shown, the cloud computing resource brokerage module can manage licenses of type "T1" that refers to a particular platform license, an/or licenses of type "T2" that refers to a site-wide or enterprise license, and/or licenses of type "T3" that refer to multiple platforms.

The various types of demand can derive from any entity type. As shown, the demand can derive from a university, a research facility, a church, a business, a government agency, a military installation, a storage vendor, a web app developer, a scientist, a student, a gamer, and so on.

In some cases, a single entity type can participate both as a resource consumer as well as a resource provider.

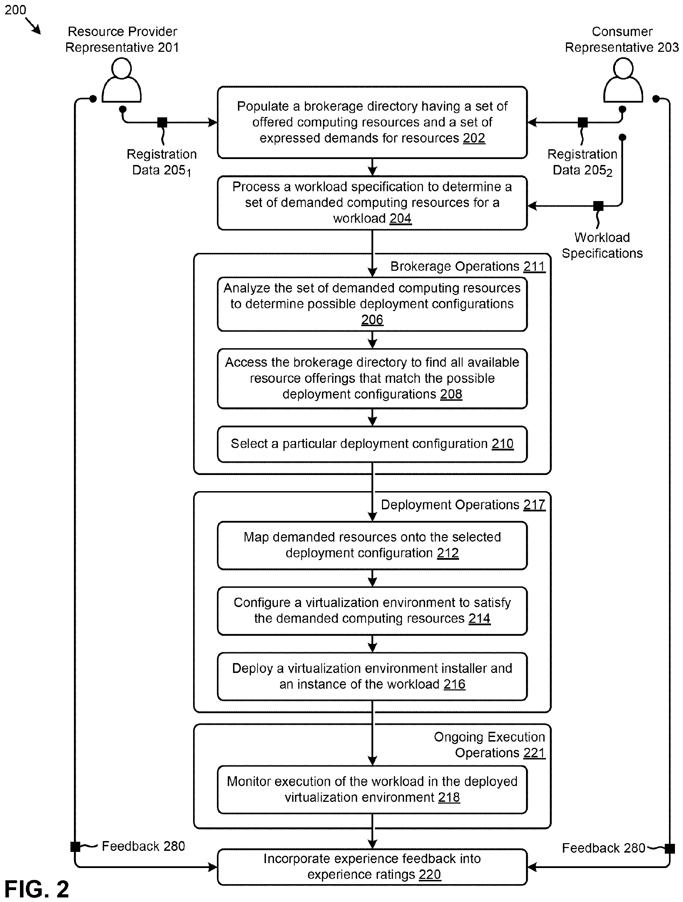

**FIG. 2** exemplifies a processing flow 200 used to implement cloud resource brokerage operations in a cloud resource ecosystem. As an option, one or more variations of processing flow 200 or any aspect thereof may be implemented in the context of the architecture and functionality of the embodiments described herein. The processing flow 200 or any aspect thereof may be implemented in any environment.

In the shown embodiment, configuration and operation of a cloud computing resource brokerage module traverses a series of steps. In some embodiments, only some portions of the flow are executed. In some embodiments the steps may be executed in an order that is different than as shown. As shown, the flow includes three general areas of processing: (1) brokerage operations 211, (2) deployment operations 217, and (3) ongoing execution operations 221.

As shown, the processing flow 200 commences at step 202 by populating a brokerage directory with registration data comprising a set of offered computing resources (e.g., encapsulated in registration data 205₁) and a set of expressed demands for resources (e.g., encapsulated in registration data 205₂). The demands are expressed as workload specifications that can be parsed by a computer to determine a corresponding set of demanded computing resources (step 204). The demanded computing resources can be analyzed to determine possible deployment configurations (step 206). For example, if the demanded computing resources amount to 200GB of memory needed, then feasible deployment configurations would need to have at least 200GB of memory available at the offered computing platform. As another example, if the demanded computing resources predict that four CPU nodes are needed, then feasible deployment configurations would need to have at least four CPUs available at the offered computing platform

Once feasible deployment configurations have been determined, then subsequent steps access the brokerage directory to find all available resources that match the possible deployment configurations (step 208). One or more feasible deployment configuration is selected at step 210, however merely selecting a particular deployment configuration, because it is feasible, still leaves the task of mapping the demanded resources onto the selected deployment configuration. This is performed at step 212.

Having a mapping of demanded resources onto a selected deployment configuration provides enough information to configure a virtualization environment to satisfy the demanded computing resources (step 214). The configured virtualization environment can then be deployed within a virtualization environment installer that includes an instance of the workload (step 216). Once installed, execution of the workload can commence. At the same time as workload execution commences, monitoring of the execution of the workload and monitoring of the health of the deployed virtualization environment is carried out continuously (step 218) until such time as the workload execution ends, or is halted, or is suspended or hibernated, or until monitoring is otherwise suspended.

At some point after execution of the workload has commenced, the resource provider representative 201 and/or the consumer representative 203 can offer feedback 280 relative to their experience. One or more modules can then incorporate the experience feedback into experience ratings (step 220).

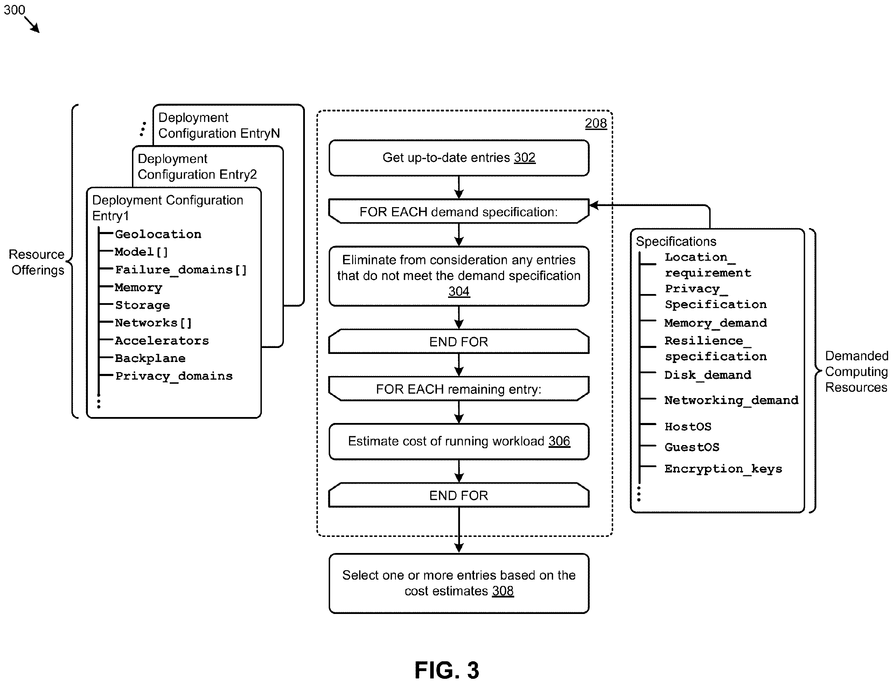

**FIG. 3** exemplifies a matching technique 300 as used to implement cloud resource brokerage operations in a cloud resource ecosystem depicts sample interactions between participants of a computing equipment ecosystem.

Returning to the discussion of processing flow 200, determining one or more resource offerings that could possibly satisfy the demand is based on heuristics that seek to identify as many feasible offerings as possible. To do so, rather than selecting the first feasible offering from the resource offerings, the opposite approach is taken. That is, after gathering the set of up-to-date entries for all resource offerings (step 302), each demand specification (e.g., as earlier determined in step 204) is compared against the set of all up-to-date resource offering. Any resource offering that fails to satisfy any particular demand specification is eliminated from further consideration (step 304).

As examples, if a demand specification includes that the platform be located in a particular region or in (or out) of a particular political boundary, then any resource offering a "geolocation" property that fails to satisfy that requirement is eliminated. As another example, if a demand specification includes a demand that the platform support a virtual private cloud (VPC), then any resource offering that does not have an applicable "model [ ]" (e.g., CPU architecture) that supports thread isolation and other low-level capabilities needed for VPC would be eliminated from further consideration. As yet another example, if the demand specification includes a particular security level specification, then any resource offering that does not have sufficient hardware capabilities (e.g., a hardware encryption processor) is eliminated from further consideration.

Any particular resource offering may address some or all of the properties of a deployment configuration entry. Strictly as examples, such properties might include an offering of the number of "Failure_domains [ ] ", an amount of "Memory", an amount of "Storage", a listing of "Networks [ ] ", a listing of "Accelerators" (e.g., GPUs, etc.), a description of the "Backplane" network, a description of "Privacy_domains", and so on.

This process of considering individual items of the given demand specifications one-by-one serves to eliminate entries for resource offerings that are not feasible for addressing the particular individual demand item. In a next process (commencing at step 306), each remaining entry (e.g., remaining entries that were not eliminated in step 304) is considered with respect to a cost consideration. After all entries that were not eliminated in step 306 have been considered with respect to a cost analysis, one or more "best cost" entries are selected (step 308) for further processing.

The processing flow 300 is performed over each of the possible deployment configurations that were developed in step 206.

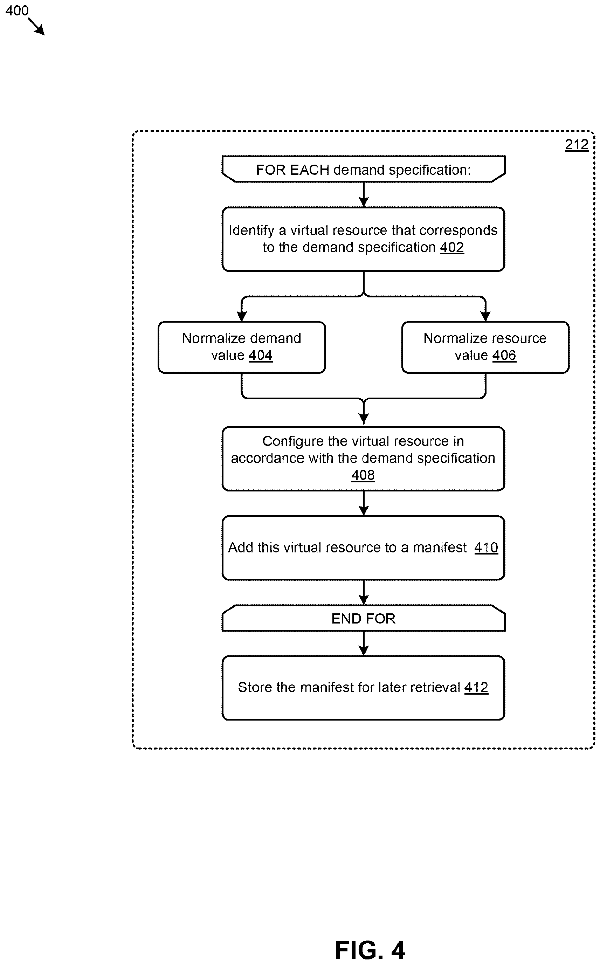

**FIG. 4** exemplifies a resource mapping technique 400 as used to implement cloud resource brokerage operations in a cloud resource ecosystem. The resource mapping technique 400 serves to minimize the cost to the resource demander. More specifically, the situation often arises that a resource provider might indicate availability of a 'large' computing platform, even though the 'large' computing platform can reasonably be subdivided.

As one example, a resource provider might indicate availability of a computing platform that has 32 nodes. While the presence of 32 nodes would satisfy a demand for 16 nodes, the demander would not want to pay for all 32 nodes. Accordingly, when a feasible deployment configuration exceeds the demand, operation of resource mapping technique 400 serves to pare down the offered deployment configuration to only those resources needed by the workload. Techniques to pare down the offered deployment configuration take advantage of the notion of virtualized resources. For example, if a physical computing node comprises 500 Gigabytes of real memory, but the demand only calls for 100 Gigabytes of memory, then a virtual memory device comprising 100 Gigabytes of memory can be specified and passed to the resource provider in the form of a manifest of virtual entities.

To accomplish this, each demand specification (i.e., refer to the demand specifications of FIG. 3) is considered individually. Each demand corresponds to a virtual resource (step 402). Characteristics of a demand specification and its corresponding virtual device are normalized (step 404 and step 406) and the virtual device is configured in accordance with the (normalized) demand (step 408). The configured virtual device is added to a manifest of virtualized resources (step 410). This flow is repeated for each demand specification. When all demand specifications have been considered, the manifest is stored for later retrieval (step 412).

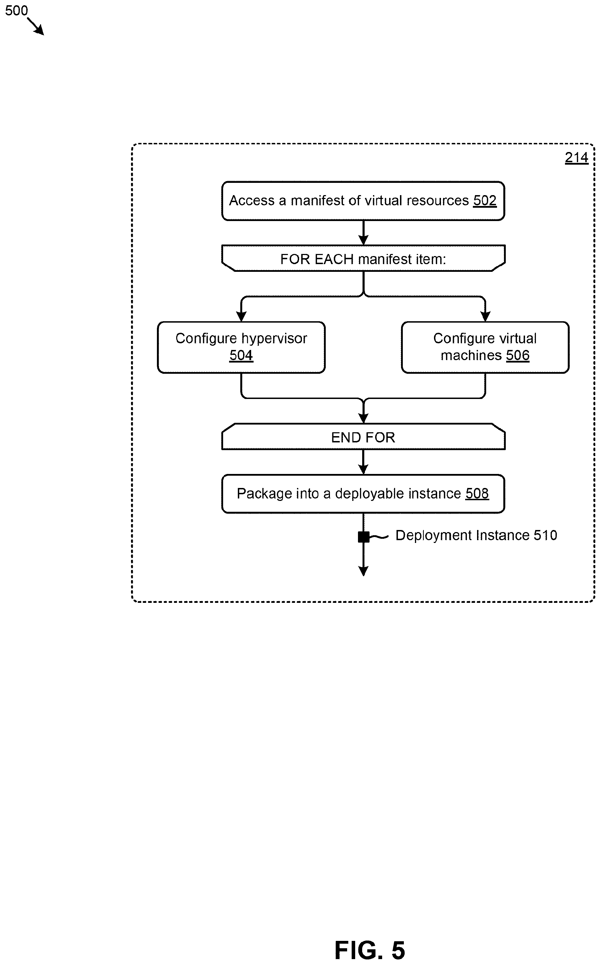

**FIG. 5** exemplifies a virtualization environment configuration technique 500 as used to implement cloud resource brokerage operations in a cloud resource ecosystem. When a manifest of virtual resources (refer to FIG. 4) becomes available, the virtualization environment configuration technique 500 can commence.

Specifically, at step 502, virtualization environment configuration technique 500 will access the manifest of virtual resources produced by the resource mapping technique 400. Then, for each item in the manifest, the nature of the virtual resource is considered with respect to a hypervisor and with respect to one or more virtual machines. In some cases, a particular virtualized resource is manifested as a configuration of a hypervisor (at step 504) whereas, in other cases, a particular virtualized resource is manifested as a configuration of a virtual machine (at step 506). Strictly as examples, a demand for a virtual private node, or a demand for a replication factor across all data, would be configured into a hypervisor, whereas a demand for a storage area in a virtual disk would be configured into a virtual machine.

When the configuration of the hypervisor and any virtual machines is complete, then a deployable instance can be packaged (step 508).

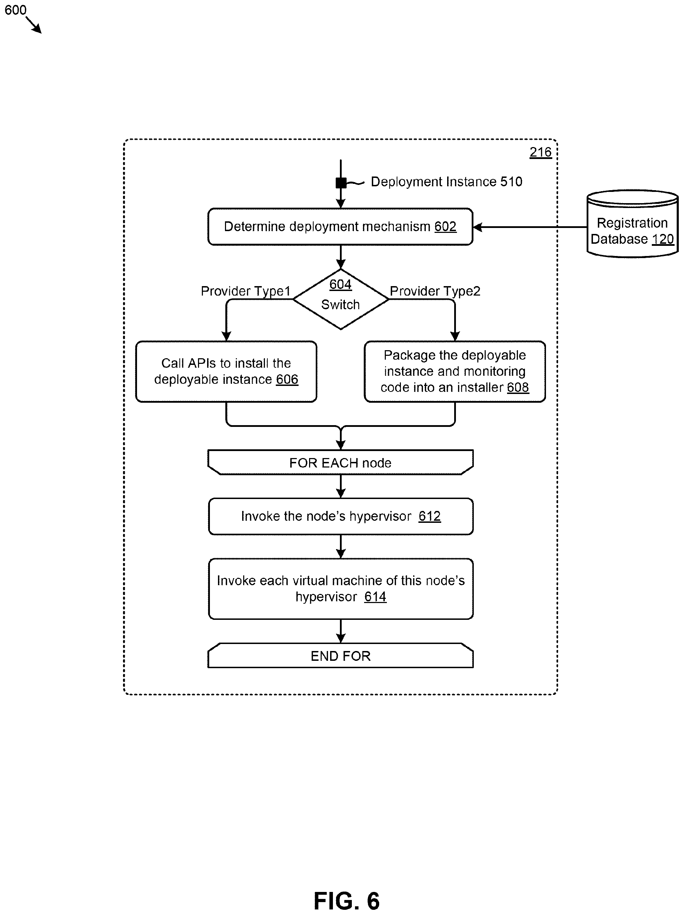

**FIG. 6** exemplifies a virtualization environment deployment technique 600 as used to implement cloud resource brokerage operations in a cloud resource ecosystem. The operation of virtualization environment deployment technique 600 satisfies needs of different types of resource providers. Specifically, some resource providers are relatively sophisticated and purvey their cloud offerings together with a wide range of functions that support installation onto "bare metal". However, there are other resource providers that are relatively less sophisticated and rely on an image installer to take care of initial image configuration and launching. The shown virtualization environment deployment technique 600 is able to discern the deployment type needed based on information in a registration database.

Upon receiving a deployable instance 510, registration database 120 is consulted to determine the characteristics of the target resource provider. Specifically, the types of deployment mechanisms provided by the target resource provider are determined (step 602). If the resource provider supports deployment mechanisms of "Type1" (e.g., a public cloud provider) then the left path of switch 604 is taken. On the other hand, if the resource provider supports deployment mechanisms of "Type2" (e.g., a private cloud resource provider) then the right path is taken. In the "Type1" case, an API is called to install the deployable instance 510 onto the resource provider's infrastructure (step 606). In the "Type2" case the deployable instance 510 is packaged together with any needed monitoring code into a self-installer, which self-installer can be loaded onto the resource provider's infrastructure (step 608) and executed from there. Execution is then initiated. A deployment may involve multiple nodes of the resource provider's infrastructure that each host a deployment instance. Specifically, and as shown, each node involved in the deployment onto the resource provider's infrastructure is addressed so as to start execution of that node's hypervisor (step 612), after which each virtual machine belonging to that node's hypervisor is started (step 614). In some cases, the hypervisor can be invoked at an entry point such that the hypervisor autonomously starts its own virtual machines. In other cases, multiple calls can be made to the hypervisor to (1) bring-up the hypervisor to a ready state (e.g., where all virtualized devices have been configured with respect to the underlying hardware), and (2) invoke a virtual machine loader routine, which in turn will invoke each virtual machine of the hypervisor according to a predefined schedule.

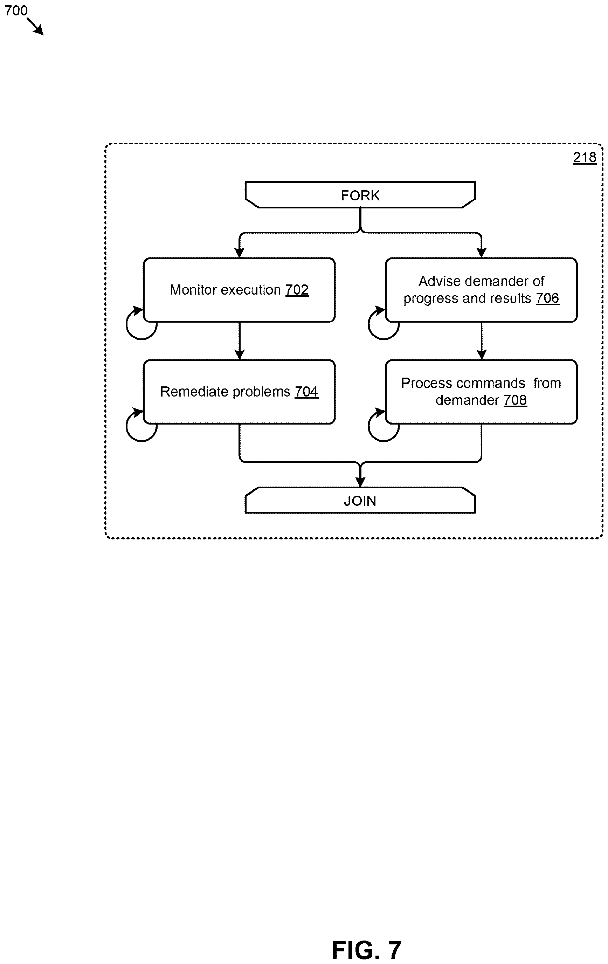

The running of any code of the deployment instance, including any self-installer that may be incorporated into the deployed virtualization environment can be monitored during execution. Such monitoring including various techniques for processing of administrative commands and various techniques for remediation are shown and described as pertains to FIG. 7.

**FIG. 7** exemplifies a virtualization environment monitoring technique 700 as used to implement cloud resource brokerage operations in a cloud resource ecosystem. Referring again to steps of ongoing operations 221 of FIG. 2, and specifically the monitoring activities of step 218, such monitoring activities are carried out on an ongoing basis. In some embodiments, and as shown, monitoring activities may include recognizing problems and remediating the problems.

This can be accomplished in many ways. In the example embodiment of FIG. 7, process 702 serves to continually monitor execution of the deployable instance. Of course, it is possible that the deployable instance or its installer causes many physical nodes to be used. In such cases, the deployable instance includes sufficient monitoring code and instructions such that any or all of the nodes used at the resource provider location can be continually monitored. In some cases, the total number of nodes consumed during the execution of the workload is not known at the time the installer is generated and, in such cases, the monitoring code in the installer includes provisions for dynamic deployment of the monitoring code.

A remediation process 704 runs concurrently and in cooperation with monitoring process 702. Specifically, remediation process 704 may receive messages from monitoring process 702. Strictly as one example, if the monitoring process reports an unrecoverable timeout on a network interface, the remediation process might allocate and substitute in an alternate network interface.

In addition to execution monitoring and remediation, a process 706 runs continually to monitor progress of execution of the workload. A companion process 708 serves to continually be responsive to any commands or other instructions from the demander. For example, process 708 is configured to be able to receive a user command at any moment in time. Strictly as one example, process 708 can respond to a message or API call or web service call that raises an event to initiate processing of a suspend or release or hibernate or resume command.

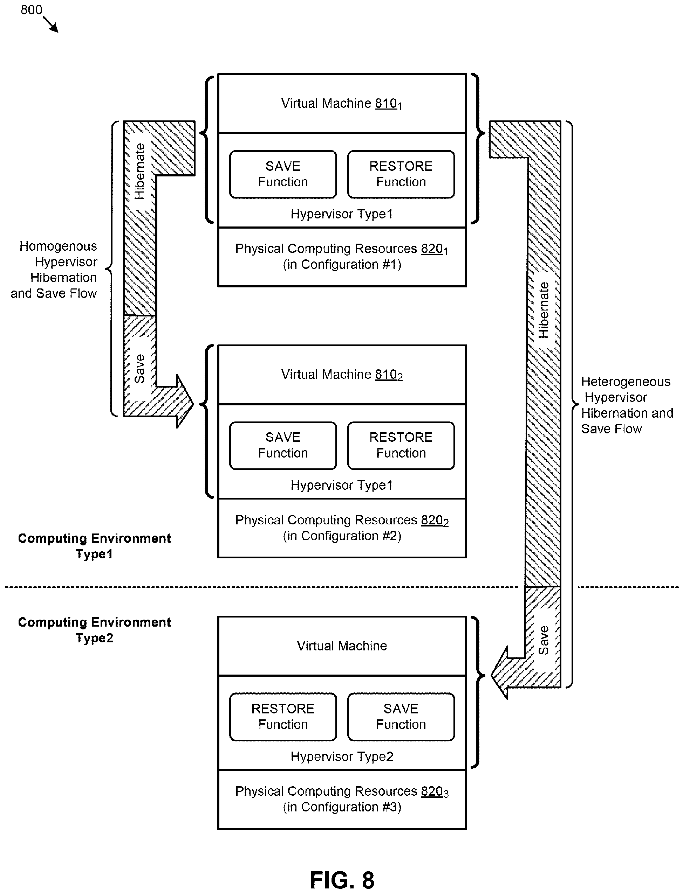

In the context of the foregoing, suspend or release or hibernate or resume commands can be applied to a deployment, or to a hypervisor, or to a virtual machine. An example of a hibernate command over a hypervisor is shown and described as pertains to FIG. 8.

**FIG. 8** depicts hypervisor SAVE and RESTORE functions. As an option, one or more variations of hypervisor save and restore functions 800 or any aspect thereof may be implemented in the context of the architecture and functionality of the embodiments described herein. The hypervisor save and restore functions 800 or any aspect thereof may be implemented in any environment.

FIG. 8 illustrates aspects pertaining to hibernating a hypervisor and its virtual machines before moving the virtual machine(s) and its hypervisor states to a different host computing system. Specifically, the figure is being presented with respect to its contribution to addressing the problem of moving a virtual machine (e.g., virtual machine 810₁) and its hypervisor states to a different host computing system.

The embodiment shown in FIG. 8 is merely one example. As shown by the heterogeneous hypervisor hibernation and save transition, the hypervisor save and restore technique involves moving a hypervisor and its one or more virtual machines from a first computing environment (e.g., computing environment type1) to a second computing environment (e.g., computing environment type2), where the hypervisor type is the same, but the physical computing resources 820₁ are different in at least one aspect as compared to the physical computing resources 820₂.

As depicted by the homogeneous hypervisor hibernation and save flow, hypervisor states, including any states of any virtual machines running atop the hypervisor type1, can be saved (e.g., after a quiesce phase) and restored (e.g., after a migration) to a different set of physical computing resources 820₁ or to the same set of physical resources in a different configuration. Any hypervisor save techniques (e.g., as implemented by the "SAVE" function of the hypervisor type1, as shown) and any hypervisor restore techniques (e.g., as implemented by the "RESTORE" function of the hypervisor type1, as shown) can be used to process any types of hardware or software states.

In some cases, a hibernated hypervisor is moved from a first set of computing resources in a first configuration to a second set of computing resources in a second configuration. As such, the acts of wake-up include reconciliation of any state parameters that could differ (e.g., differ in semantics, or differ in value, etc.) between the two systems. Strictly as an example, during wake-up of a hibernated hypervisor on a second system, the IP address that was recorded in the "SAVE" portion of hibernate and wake-up of a node would be replaced or otherwise reconciled with the IP address of the target node on which node the "RESTORE" is taking place. In other situations, physical hardware characteristics of the two nodes are reconciled. For example, the physical computing resources comprising a first configuration might have 20GB of local storage that is organized as two 10G drives, whereas the physical computing resources of a second configuration might have 20GB of local storage that is organized as four 5G drives. As such, the migrated virtual machine 810₂ will wake-up having a different hardware configuration as compare to the hardware configuration of the environment from which it was migrated.

In some cases, it is desired that the state of a hibernated hypervisor of a first type is restarted into a hypervisor of a second type. A pathway for heterogeneous platform hibernation and wake-up is shown on the right side of FIG. 800. In this case, the heterogeneity derives either from differences between hypervisor type1 and hypervisor type2, or from differences between the configuration of physical computing resources 820₁ and the configuration of physical computing resources 820₃.

In this situation, since the hypervisors are of different types, there is a need for further reconciliation steps to be taken. Strictly as examples, the syntax of parameter values might differ between the two hypervisors of different types. As another example, a hypervisor of a first type might refer to storage capacity in megabytes, whereas a hypervisor of a second type might refer to storage capacity in gigabytes. Accordingly, the "SAVE" and "RESTORE" functions cooperate to implement reconciliation of heterogeneous hypervisor parameters.

The foregoing supports many use cases. As examples, a hypervisor can be migrated from an on-premises (i.e., on-prem) setting into a public cloud (or vice-versa). Or a hypervisor can be migrated from a public cloud to a private cloud (or vice-versa). Or, a hypervisor can be migrated from a first on-prem setting to a second on-prem setting (or vice-versa). Moreover, there are many reasons why a hypervisor might be migrated. For example, an on-prem site might be undergoing a hardware upgrade, which would force one or more nodes of the on-prem site to be at least temporarily decommissioned. As another example, a public cloud provider might force a service interval on a tenant-forcing the tenant to move computing tasks off the node or nodes to be serviced.

In some situations, hypervisor hibernation can be chained. As such, a first hibernation from a first platform can be followed by a first wake-up at a second platform, and a second hibernation from the second platform can be followed by a second wake-up at a third platform, and so on. As depicted, the configuration of the first platform can be different from the configuration of the second platform, and so on.

Further details regarding general approaches to hibernating a hypervisor are described in U.S. Patent Application Ser. No 16/778,909 titled "HYPERVISOR HIBERNATION", filed on January 31, 2020.

### VIRTUALIZATION ENVIRONMENTS

### Virtualization Environment Examples

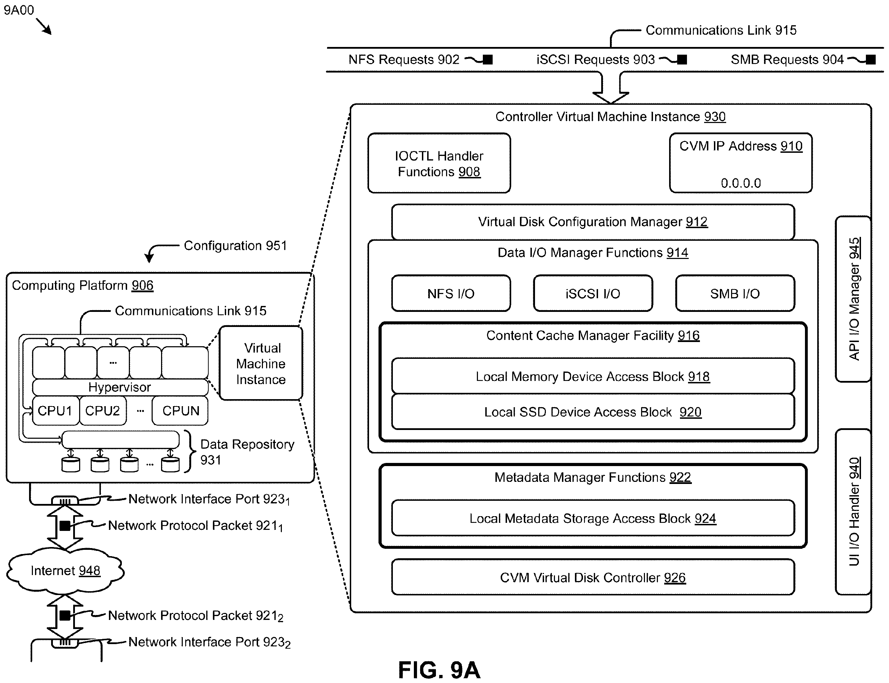

**FIG. 9A** depicts components of a virtualization environment. In particular, FIG. 9A depicts a virtualization environment a configuration 951. The heretofore-disclosed embodiments, including variations of any components of a virtualization environment such as the depicted virtualized controllers, can be implemented in distributed systems where a plurality of networked-connected devices communicate and coordinate actions using intercomponent messaging. Many of the virtualization environments described herein comprise distributed systems that are delivered as a set of interconnected components that are designed for, or dedicated to, storage operations as well as being designed for, or dedicated to, computing and/or networking operations. Interconnected components in a distributed system can operate cooperatively to achieve a particular objective such as to provide high-performance computing, high-performance networking capabilities, and/or high-performance storage and/or high-capacity storage capabilities. For example, a first set of components of a distributed computing system can coordinate to efficiently use a set of computational or compute resources, while a second set of components of the same distributed computing system can coordinate to efficiently use the same or a different set of data storage facilities.

A hyperconverged system coordinates the efficient use of compute and storage resources by and between the components of the distributed system. Adding a hyperconverged unit to a hyperconverged system expands the system in multiple dimensions. As an example, adding a hyperconverged unit to a hyperconverged system can expand the system in the dimension of storage capacity while concurrently expanding the system in the dimension of computing capacity and also in the dimension of networking bandwidth. Components of any of the foregoing distributed systems can comprise physically and/or logically distributed autonomous entities.

Physical and/or logical collections of such autonomous entities can sometimes be referred to as nodes. In some hyperconverged systems, compute and storage resources can be integrated into a unit of a node. Multiple nodes can be interrelated into an array of nodes, which nodes can be grouped into physical groupings (e.g., arrays) and/or into logical groupings or topologies of nodes (e.g., spoke-and-wheel topologies, rings, etc.). Some hyperconverged systems implement certain aspects of virtualization. For example, in a hypervisor-assisted virtualization environment, certain of the autonomous entities of a distributed system can be implemented as virtual machines. As another example, in some virtualization environments, autonomous entities of a distributed system can be implemented as executable containers. In some systems and/or environments, hypervisor-assisted virtualization techniques and operating system virtualization techniques are combined.

As shown, virtual machine architecture 9A00 comprises a collection of interconnected components suitable for implementing embodiments of the present disclosure and/or for use in the herein-described environments. Moreover, virtual machine architecture 9A00 includes a virtual machine instance in configuration 951 that is further described as pertaining to controller virtual machine instance 930. Configuration 951 supports virtual machine instances that are deployed as user virtual machines, or controller virtual machines or both. Such virtual machines interface with a hypervisor (as shown). Some virtual machines include processing of storage I/O (input/output or IO) as received from any or every source within the computing platform. An example implementation of such a virtual machine that processes storage I/O is depicted as 930.

In this and other configurations, a controller virtual machine instance receives block I/O storage requests as network file system (NFS) requests in the form of NFS requests 902, and/or internet small computer storage interface (iSCSI) block IO requests in the form of iSCSI requests 903, and/or Samba file system (SMB) requests in the form of SMB requests 904. The controller virtual machine (CVM) instance publishes and responds to an internet protocol (IP) address (e.g., CVM IP address 910). Various forms of input and output can be handled by one or more IO control handler functions (e.g., IOCTL handler functions 908) that interface to other functions such as data IO manager functions 914 and/or metadata manager functions 922. As shown, the data IO manager functions can include communication with virtual disk configuration manager 912 and/or can include direct or indirect communication with any of various block IO functions (e.g., NFS IO, iSCSI IO, SMB IO, etc.).

In addition to block IO functions, configuration 951 supports IO of any form (e.g., block IO, streaming IO, packet-based IO, HTTP traffic, etc.) through either or both of a user interface (UI) handler such as UI IO handler 940 and/or through any of a range of application programming interfaces (APIs), possibly through API IO manager 945.

Communications link 915 can be configured to transmit (e.g., send, receive, signal, etc.) any type of communications packets comprising any organization of data items. The data items can comprise a payload data, a destination address (e.g., a destination IP address) and a source address (e.g., a source IP address), and can include various packet processing techniques (e.g., tunneling), encodings (e.g., encryption), and/or formatting of bit fields into fixed-length blocks or into variable length fields used to populate the payload. In some cases, packet characteristics include a version identifier, a packet or payload length, a traffic class, a flow label, etc. In some cases, the payload comprises a data structure that is encoded and/or formatted to fit into byte or word boundaries of the packet.

In some embodiments, hard-wired circuitry may be used in place of, or in combination with, software instructions to implement aspects of the disclosure. Thus, embodiments of the disclosure are not limited to any specific combination of hardware circuitry and/or software. In embodiments, the term "logic" shall mean any combination of software or hardware that is used to implement all or part of the disclosure.

The term "computer readable medium" or "computer usable medium" as used herein refers to any medium that participates in providing instructions to a data processor for execution. Such a medium may take many forms including, but not limited to, non-volatile media and volatile media. Non-volatile media includes any non-volatile storage medium, for example, solid state storage devices (SSDs) or optical or magnetic disks such as hard disk drives (HDDs) or hybrid disk drives, or random access persistent memories (RAPMs) or optical or magnetic media drives such as paper tape or magnetic tape drives. Volatile media includes dynamic memory such as random access memory. As shown, controller virtual machine instance 930 includes content cache manager facility 916 that accesses storage locations, possibly including local dynamic random access memory (DRAM) (e.g., through local memory device access block 918) and/or possibly including accesses to local solid state storage (e.g., through local SSD device access block 920).

Common forms of computer readable media include any non-transitory computer readable medium, for example, floppy disk, flexible disk, hard disk, magnetic tape, or any other magnetic medium; CD-ROM or any other optical medium; punch cards, paper tape, or any other physical medium with patterns of holes; or any RAM, PROM, EPROM, FLASH-EPROM, or any other memory chip or cartridge. Any data can be stored, for example, in any form of data repository 931, which in turn can be formatted into any one or more storage areas, and which can comprise parameterized storage accessible by a key (e.g., a filename, a table name, a block address, an offset address, etc.). Data repository 931 can store any forms of data, and may comprise a storage area dedicated to storage of metadata pertaining to the stored forms of data. In some cases, metadata can be divided into portions. Such portions and/or cache copies can be stored in the storage data repository and/or in a local storage area (e.g., in local DRAM areas and/or in local SSD areas). Such local storage can be accessed using functions provided by local metadata storage access block 924. The data repository 931 can be configured using CVM virtual disk controller 926, which can in turn manage any number or any configuration of virtual disks.

Execution of a sequence of instructions to practice certain embodiments of the disclosure are performed by one or more instances of a software instruction processor, or a processing element such as a data processor, or such as a central processing unit (e.g., CPU1, CPU2, ..., CPUN). According to certain embodiments of the disclosure, two or more instances of configuration 951 can be coupled by communications link 915 (e.g., backplane, LAN, PSTN, wired or wireless network, etc.) and each instance may perform respective portions of sequences of instructions as may be required to practice embodiments of the disclosure.

The shown computing platform 906 is interconnected to the Internet 948 through one or more network interface ports (e.g., network interface port 923₁ and network interface port 923₂). Configuration 951 can be addressed through one or more network interface ports using an IP address. Any operational element within computing platform 906 can perform sending and receiving operations using any of a range of network protocols, possibly including network protocols that send and receive packets (e.g., network protocol packet 921₁ and network protocol packet 921₂).

Computing platform 906 may transmit and receive messages that can be composed of configuration data and/or any other forms of data and/or instructions organized into a data structure (e.g., communications packets). In some cases, the data structure includes program instructions (e.g., application code) communicated through the Internet 948 and/or through any one or more instances of communications link 915. Received program instructions may be processed and/or executed by a CPU as it is received and/or program instructions may be stored in any volatile or non-volatile storage for later execution. Program instructions can be transmitted via an upload (e.g., an upload from an access device over the Internet 948 to computing platform 906). Further, program instructions and/or the results of executing program instructions can be delivered to a particular user via a download (e.g., a download from computing platform 906 over the Internet 948 to an access device).

Configuration 951 is merely one sample configuration. Other configurations or partitions can include further data processors, and/or multiple communications interfaces, and/or multiple storage devices, etc. within a partition. For example, a partition can bound a multi-core processor (e.g., possibly including embedded or collocated memory), or a partition can bound a computing cluster having a plurality of computing elements, any of which computing elements are connected directly or indirectly to a communications link. A first partition can be configured to communicate to a second partition. A particular first partition and a particular second partition can be congruent (e.g., in a processing element array) or can be different (e.g., comprising disjoint sets of components).

A cluster is often embodied as a collection of computing nodes that can communicate between each other through a local area network (e.g., LAN or virtual LAN (VLAN)) or a backplane. Some clusters are characterized by assignment of a particular set of the aforementioned computing nodes to access a shared storage facility that is also configured to communicate over the local area network or backplane. In many cases, the physical bounds of a cluster are defined by a mechanical structure such as a cabinet or such as a chassis or rack that hosts a finite number of mounted-in computing units. A computing unit in a rack can take on a role as a server, or as a storage unit, or as a networking unit, or any combination therefrom. In some cases, a unit in a rack is dedicated to provisioning of power to other units. In some cases, a unit in a rack is dedicated to environmental conditioning functions such as filtering and movement of air through the rack and/or temperature control for the rack. Racks can be combined to form larger clusters. For example, the LAN of a first rack having a quantity of 92 computing nodes can be interfaced with the LAN of a second rack having 16 nodes to form a two-rack cluster of 48 nodes. The former two LANs can be configured as subnets, or can be configured as one VLAN. Multiple clusters can communicate between one module to another over a WAN (e.g., when geographically distal) or a LAN (e.g., when geographically proximal).

As used herein, a module can be implemented using any mix of any portions of memory and any extent of hard-wired circuitry including hard-wired circuitry embodied as a data processor. Some embodiments of a module include one or more special-purpose hardware components (e.g., power control, logic, sensors, transducers, etc.). A data processor can be organized to execute a processing entity that is configured to execute as a single process or configured to execute using multiple concurrent processes to perform work. A processing entity can be hardware-based (e.g., involving one or more cores) or software-based, and/or can be formed using a combination of hardware and software that implements logic, and/or can carry out computations and/or processing steps using one or more processes and/or one or more tasks and/or one or more threads or any combination thereof.

Some embodiments of a module include instructions that are stored in a memory for execution so as to facilitate operational and/or performance characteristics pertaining to operating a cloud resource brokerage in a cloud resource ecosystem. In some embodiments, a module may include one or more state machines and/or combinational logic used to implement or facilitate the operational and/or performance characteristics pertaining to operation of a cloud resource brokerage in a cloud resource ecosystem.

Various implementations of the data repository comprise storage media organized to hold a series of records or files such that individual records or files are accessed using a name or key (e.g., a primary key or a combination of keys and/or query clauses). Such files or records can be organized into one or more data structures (e.g., data structures used to implement or facilitate aspects of cloud resource brokerage implementations in a cloud resource ecosystem). Such files or records can be brought into and/or stored in volatile or non-volatile memory. More specifically, the occurrence and organization of the foregoing files, records, and data structures improve the way that the computer stores and retrieves data in memory, for example, to improve the way data is accessed when the computer is performing operations pertaining to operating a cloud resource brokerage in a cloud resource ecosystem, and/or for improving the way data is manipulated when performing computerized operations pertaining to configuration and operation of a cloud computing resource brokerage module to dynamically migrate workloads on demand.

Further details regarding general approaches to managing data repositories are described in U.S. Patent No. 8,601,473 titled "ARCHITECTURE FOR MANAGING I/O AND STORAGE FOR A VIRTUALIZATION ENVIRONMENT", issued on December 3, 2013.

Further details regarding general approaches to managing and maintaining data in data repositories are described in U.S. Patent No. 8,549,518 titled "METHOD AND SYSTEM FOR IMPLEMENTING A MAINTENANCE SERVICE FOR MANAGING I/O AND STORAGE FOR A VIRTUALIZATION ENVIRONMENT", issued on October 1, 2013.

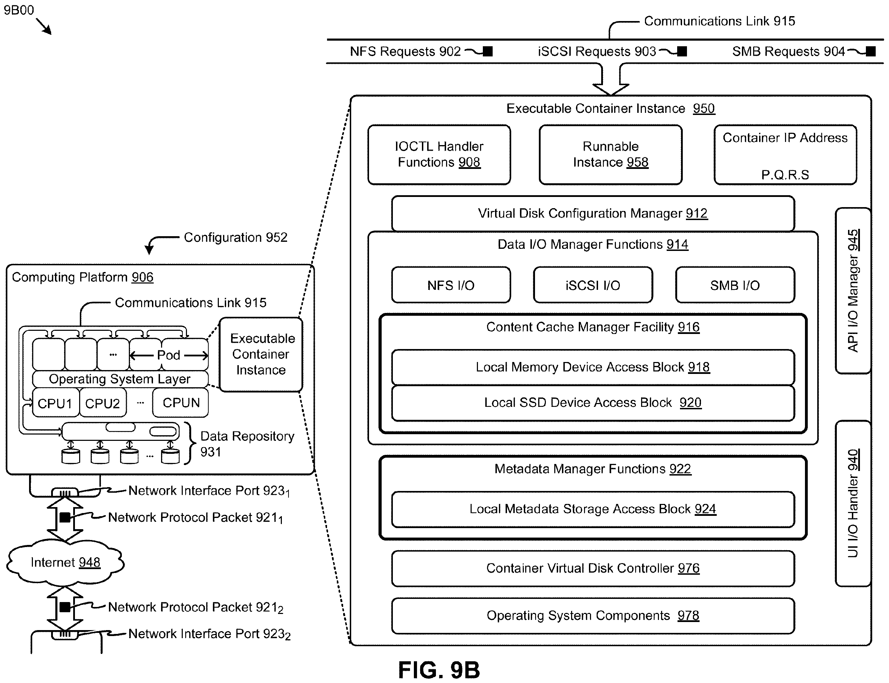

**FIG. 9B** depicts a virtualized controller implemented by containerized architecture 9B00. The containerized architecture comprises a collection of interconnected components suitable for implementing embodiments of the present disclosure and/or for use in the herein-described environments. Moreover, the shown containerized architecture 9B00 includes an executable container instance in configuration 952 that is further described as pertaining to executable container instance 950. Configuration 952 includes an operating system layer (as shown) that performs addressing functions such as providing access to external requestors (e.g., user virtual machines or other processes) via an IP address (e.g., "P.Q.R.S", as shown). Providing access to external requestors can include implementing all or portions of a protocol specification (e.g., "http:") and possibly handling port-specific functions. In this and other embodiments, external requestors (e.g., user virtual machines or other processes) rely on the aforementioned addressing functions to access a virtualized controller for performing all data storage functions. Furthermore, when data input or output requests are received from a requestor running on a first node are received at the virtualized controller on that first node, then in the event that the requested data is located on a second node, the virtualized controller on the first node accesses the requested data by forwarding the request to the virtualized controller running at the second node. In some cases, a particular input or output request might be forwarded again (e.g., an additional or Nth time) to further nodes. As such, when responding to an input or output request, a first virtualized controller on the first node might communicate with a second virtualized controller on the second node, which second node has access to particular storage devices on the second node or, the virtualized controller on the first node may communicate directly with storage devices on the second node.

The operating system layer can perform port forwarding to any executable container (e.g., executable container instance 950). An executable container instance can be executed by a processor. Runnable portions of an executable container instance sometimes derive from an executable container image, which in turn might include all, or portions of any of, a Java archive repository (JAR) and/or its contents, and/or a script or scripts and/or a directory of scripts, and/or a virtual machine configuration, and may include any dependencies therefrom. In some cases, a configuration within an executable container might include an image comprising a minimum set of runnable code. Contents of larger libraries and/or code or data that would not be accessed during runtime of the executable container instance can be omitted from the larger library to form a smaller library composed of only the code or data that would be accessed during runtime of the executable container instance. In some cases, start-up time for an executable container instance can be much faster than start-up time for a virtual machine instance, at least inasmuch as the executable container image might be much smaller than a respective virtual machine instance. Furthermore, start-up time for an executable container instance can be much faster than start-up time for a virtual machine instance, at least inasmuch as the executable container image might have many fewer code and/or data initialization steps to perform than a respective virtual machine instance.

An executable container instance (e.g., a Docker container instance) can serve as an instance of an application container or as a controller executable container. Any executable container of any sort can be rooted in a directory system, and can be configured to be accessed by file system commands (e.g., "Is" or "Is -a", etc.). The executable container might optionally include operating system components 978, however such a separate set of operating system components need not be provided. As an alternative, an executable container can include runnable instance 958, which is built (e.g., through compilation and linking, or just-in-time compilation, etc.) to include all of the library and OS-like functions needed for execution of the runnable instance. In some cases, a runnable instance can be built with a virtual disk configuration manager, any of a variety of data IO management functions, etc. In some cases, a runnable instance includes code for, and access to, container virtual disk controller 976. Such a container virtual disk controller can perform any of the functions that the aforementioned CVM virtual disk controller 926 can perform, yet such a container virtual disk controller does not rely on a hypervisor or any particular operating system so as to perform its range of functions.

In some environments, multiple executable containers can be collocated and/or can share one or more contexts. For example, multiple executable containers that share access to a virtual disk can be assembled into a pod (e.g., a Kubernetes pod). Pods provide sharing mechanisms (e.g., when multiple executable containers are amalgamated into the scope of a pod) as well as isolation mechanisms (e.g., such that the namespace scope of one pod does not share the namespace scope of another pod).

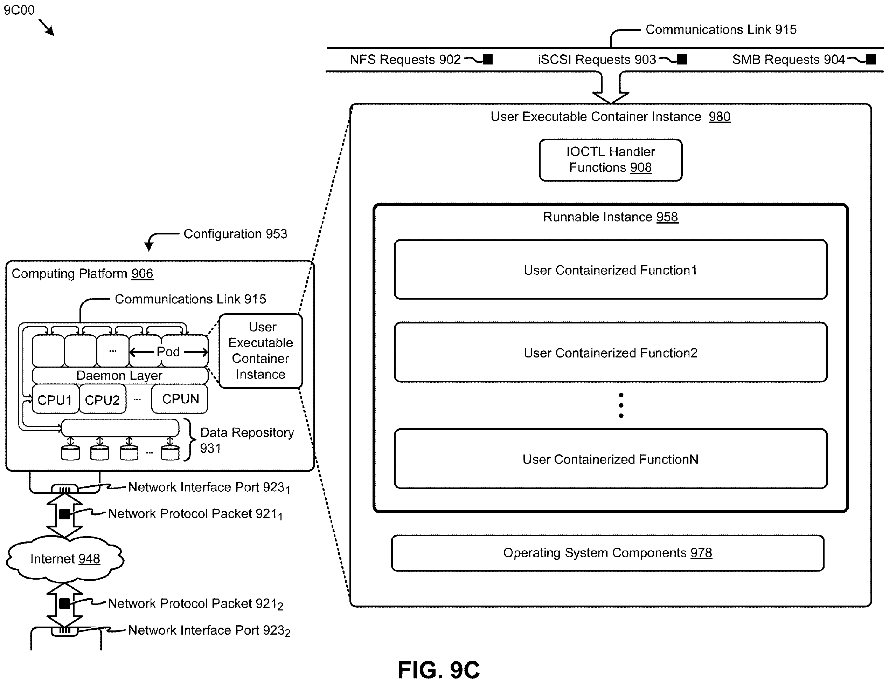

**FIG. 9C** depicts a virtualized controller implemented by a daemon-assisted containerized architecture 9C00. The containerized architecture comprises a collection of interconnected components suitable for implementing embodiments of the present disclosure and/or for use in the herein-described environments. Moreover, the shown daemon-assisted containerized architecture includes a user executable container instance in configuration 953 that is further described as pertaining to user executable container instance 980. Configuration 953 includes a daemon layer (as shown) that performs certain functions of an operating system.

User executable container instance 980 comprises any number of user containerized functions (e.g., user containerized function1, user containerized function2, ..., user containerized functionN). Such user containerized functions can execute autonomously or can be interfaced with or wrapped in a runnable object to create a runnable instance (e.g., runnable instance 958). In some cases, the shown operating system components 978 comprise portions of an operating system, which portions are interfaced with or included in the runnable instance and/or any user containerized functions. In this embodiment of a daemon-assisted containerized architecture, the computing platform 906 might or might not host operating system components other than operating system components 978. More specifically, the shown daemon might or might not host operating system components other than operating system components 978 of user executable container instance 980.

The virtual machine architecture 9A00 of FIG. 9A and/or the containerized architecture 9B00 of FIG. 9B and/or the daemon-assisted containerized architecture 9C00 of FIG. 9C can be used in any combination to implement a distributed platform that contains multiple servers and/or nodes that manage multiple tiers of storage where the tiers of storage might be formed using the shown data repository 931 and/or any forms of network accessible storage. As such, the multiple tiers of storage may include storage that is accessible over communications link 915. Such network accessible storage may include cloud storage or networked storage (e.g., a SAN or storage area network). Unlike prior approaches, the presently-discussed embodiments permit local storage that is within or directly attached to the server or node to be managed as part of a storage pool. Such local storage can include any combinations of the aforementioned SSDs and/or HDDs and/or RAPMs and/or hybrid disk drives. The address spaces of a plurality of storage devices, including both local storage (e.g., using node-internal storage devices) and any forms of network-accessible storage, are collected to form a storage pool having a contiguous address space.

Significant performance advantages can be gained by allowing the virtualization system to access and utilize local (e.g., node-internal) storage. This is because I/O performance is typically much faster when performing access to local storage as compared to performing access to networked storage or cloud storage. This faster performance for locally attached storage can be increased even further by using certain types of optimized local storage devices such as SSDs or RAPMs, or hybrid HDDs, or other types of high-performance storage devices.

In example embodiments, each storage controller exports one or more block devices or NFS or iSCSI targets that appear as disks to user virtual machines or user executable containers. These disks are virtual since they are implemented by the software running inside the storage controllers. Thus, to the user virtual machines or user executable containers, the storage controllers appear to be exporting a clustered storage appliance that contains some disks. User data (including operating system components) in the user virtual machines resides on these virtual disks.

Any one or more of the aforementioned virtual disks (or "vDisks") can be structured from any one or more of the storage devices in the storage pool. As used herein, the term "vDisk" refers to a storage abstraction that is exposed by a controller virtual machine or container to be used by another virtual machine or container. In some embodiments, the vDisk is exposed by operation of a storage protocol such as iSCSI or NFS or SMB. In some embodiments, a vDisk is mountable. In some embodiments, a vDisk is mounted as a virtual storage device.

In example embodiments, some or all of the servers or nodes run virtualization software. Such virtualization software might include a hypervisor (e.g., as shown in configuration 951 of FIG. 9A) to manage the interactions between the underlying hardware and user virtual machines or containers that run client software.

Distinct from user virtual machines or user executable containers, a special controller virtual machine (e.g., as depicted by controller virtual machine instance 930) or as a special controller executable container is used to manage certain storage and I/O activities. Such a special controller virtual machine is referred to as a "CVM", or as a controller executable container, or as a service virtual machine (SVM), or as a service executable container, or as a storage controller. In some embodiments, multiple storage controllers are hosted by multiple nodes. Such storage controllers coordinate within a computing system to form a computing cluster.

The storage controllers are not formed as part of specific implementations of hypervisors. Instead, the storage controllers run above hypervisors on the various nodes and work together to form a distributed system that manages all of the storage resources, including the locally attached storage, the networked storage, and the cloud storage. In example embodiments, the storage controllers run as special virtual machines-above the hypervisors-thus, the approach of using such special virtual machines can be used and implemented within any virtual machine architecture. Furthermore, the storage controllers can be used in conjunction with any hypervisor from any virtualization vendor and/or implemented using any combinations or variations of the aforementioned executable containers in conjunction with any host operating system components.

In the foregoing specification, the disclosure has been described with reference to specific embodiments thereof. It will however be evident that various modifications and changes may be made thereto without departing from the broader scope of the disclosure. For example, the above-described process flows are described with reference to a particular ordering of process actions. However, the ordering of many of the described process actions may be changed without affecting the scope or operation of the disclosure. The specification and drawings are to be regarded in an illustrative sense rather than in a restrictive sense.

## Claims

1. A method comprising:
receiving a computing workload demand from a resource demander, wherein the computing workload demand is received at a brokerage service that matches availability of a computing resource of a private cloud provider to the computing workload demand;
invoking the brokerage service to identify a private cloud resource that is suitable to perform the computing workload, wherein the private cloud resource is not owned by the resource demander;
sending a virtualization system to install on the computing resource of the private cloud provider; and
delivering at least a portion of the computing workload to run within the virtualization system.

2. The method of claim 1, further comprising configuring the brokerage service to identify a public cloud resource.

3. The method of claim 1 or claim 2, further comprising configuring a registration console to facilitate registration of a private cloud resource.

4. The method of any of claims 1-3, further comprising mapping a virtualized computing resource onto a deployment configuration.

5. The method of any of claims 1-4, further comprising identifying a virtualization image based at least in part on the computing workload demand.

6. The method of any of claims 1-5, further comprising receiving a result from execution of the computing workload.

7. The method of any of claims 1-6, further comprising informing a private cloud resource provider of existence of the computing workload demand.

8. The method of any of claims 1-7, further comprising receiving an update of resources from the private cloud provider.

9. The method of any of claims 1-8, wherein demand specifications of the computing workload demand are normalized with respect to a corresponding virtual device.

10. The method of any of claims 1-9, wherein brokerage service matches availability of a computing resource of a private cloud provider to the computing workload demand by applying matching rules to inform a virtualization image selector.

11. The method of any of claims 1-10, wherein the private cloud resource suitable to perform the computing workload is identified, at least in part, by gathering a set of up-to-date entries for resource offerings and comparing them against a workload demand specification.

12. The method of any of claims 1-11, wherein the virtualization system to install on the computing resource is configured as a self-installer that installs a hypervisor and starts a virtual machine on the computing resource of the private cloud provider.

13. The method of claim 12, wherein the self-installer comprises monitoring code that monitors execution of the computing workload.

14. A system comprising means to implement any of the methods of claims 1-13.

15. A computer program product embodied on a computer readable medium, the computer readable medium having stored thereon a sequence of instructions which, when executed by a processor, executes any of the methods of claims 1-13.
